Europäisches Patentamt

European Patent Office

Office européen des brevets

(11) Numéro de publication: **0 269 519**
A2

(12) # DEMANDE DE BREVET EUROPEEN

(21) Numéro de dépôt: 87402628.9

(22) Date de dépôt: 23.11.87

(51) Int. Cl.4: **B 65 D 1/16**
B 05 D 5/06, B 44 C 1/00,
B 05 C 19/00

(30) Priorité: 24.11.86 FR 8616340

(43) Date de publication de la demande:
01.06.88 Bulletin 88/22

(84) Etats contractants désignés:
BE CH DE ES GB IT LI SE

(71) Demandeur: Secret, Dominique Gaston
120 Boulevard Bineau
Neuilly Sur Seine (Hauts de Seine) (FR)

(72) Inventeur: Secret, Dominique Gaston
120 Boulevard Bineau
Neuilly Sur Seine (Hauts de Seine) (FR)

(74) Mandataire: Rataboul, Michel
Cabinet Michel Rataboul 69, rue de Richelieu
F-75002 Paris (FR)

(54) **Composition applicable sur un support et dispositif pour son obtention.**

(57) La composition sèche est du type comprenant au moins deux constituants secs et est destinée à être diluée dans un liquide tel que de l'eau en vue de son application sur un support afin d'en modifier la surface.

Elle est caractérisée en ce que le premier constituant sec 1 a une couleur uniforme avantageusement blanche et le second également sec 2 est formé de fibres indépendantes de couleur différente de celle du premier constituant et de dimensions nettement inférieures à celles dudit premier constituant afin de pouvoir constituer un liant dans lequel se fond le premier constituant 1 pour créer ensemble une combinaison sèche d'aspect granuleux et de couleur sensiblement uniforme résultant de l'intime association à sec des couleurs des deux constituants 1 et 2.

De préférence, le second constituant est formé de fibres 2 d'environ un millimètre de longueur, du type utilisé couramment pour le flocage d'articles.

FIG.4

## Description

### COMPOSITION APPLICABLE SUR UN SUPPORT ET DISPOSITIF POUR SON OBTENTION

On connaît depuis longtemps le flocage qui consiste à appliquer sur un support des fibres indépendantes, plus ou moins courtes, de telle manière que celles-ci se fixent sur le support en formant une sorte de velours. C'est notamment ainsi que l'on fabrique certains rouleaux à peindre, que l'on crée des graphismes sur des chemises ou encore que l'on effectue des revêtements de parois. Pour cela, on étend d'abord un adhésif sur le support à revêtir puis on projette les fibres qui se présentent, lorsqu'elles sont en vrac, sous forme de poudre car chacune d'alles a une longueur d'environ un millimètre seulement.

Ces fibres, souvent fabriquées en viscose, sont toutes lisses et indépendantes les unes des autres. Elles ne sont donc pas enchevêtrées car, quand le flocage est terminé, chaque fibre doit être dressée par rapport à la surface du support et, donc, se comporter comme un poil.

Par ailleurs, on connaît des compositions destinées au revêtement de surfaces, notamment dans l'industrie du bâtiment, et qui comprennent d'une part des flocons provenant du broyage grossier de fibres de coton blanc et d'autre part de grains d'adhésif. Après dilution dans de l'eau, on applique le produit obtenu par projection ou avec une spatule. Ensuite l'eau s'évapore et la surface enduite a pris un aspect granuleux plus agréable à l'oeil, plus esthétique, qu'un revêtement lisse du genre plâtre.

On a cherché à diversifier ces compositions en faisant dès l'origine des mélanges de constituants plus ou moins disparates : paillettes cellulosiques, grosses fibres synthétiques, particules minérales etc. Avant dilution, la composition se présente comme une poudre grossière, granu leuse, rugueuse, Même après dilution dans un liquide tel que l'eau, les constituants ne forment pas un tout homogène mais restent simplement juxtaposés et discernables individuellement. On distingue très bien, par exemple, des grains de pierre broyée qui conservent leur aspect naturel, par rapport à une base de couleur différente. Les grosses particules, fibres ou grains minéraux, sont en quelque sorte des inserts volontairement contrastés pour donner un aspect de "pointillisme". Il est évident, en effet, que des grains minéraux, des paillettes brillantes ou de grosses fibres broyées ne peuvent ni colorer ni être colorés uniformément.

Si l'on veut un revêtement à la fois en relief et uniformément coloré, on est actuellement obligés d'agir en deux temps : d'abord mise en place du revêtement granuleux puis peinture, de préférence au pistolet.

L'état de la technique peut être illustré par les brevets FR-A-1.152.820 et FR-A-2.538.273.

Le premier document concerne un procédé de représentation picturale qui consiste à créer des "tableaux" non plus avec de la peinture mais en collant des fibres diversement colorées. On obtient évidemment un effet décoratif particulier, distinct de la "peinture" classique mais qui n'a rien de commun avec la présente invention puisque celle-ci concerne une composition destinée à des revtements muraux. Ce document indique, par souci d'étendre abstraitement la portée du brevet, que l'on peut utiliser toutes fibres, quelle que soit leur nature et leur provenance mais il s'agit d'une banalité qui ne laisse pas entrevoir la présente invention dans toute sa spécificité.

Le second document montre bien ce qui est à l'opposé de la présente invention, à savoir l'obtention d'un mélange par teinture, c'est-à-dire par addition de teintes et de fixatifs au moment de l'utilisation, quand on a déjà préparé une pâte par mélange de fibres et d'eau, le tout de couleur neutre. Ce procédé est exactement à l'opposé de ce que propose la présente invention.

En effet, la présente invention s'écarte de ces solutions connues en permettant de préparer une composition qui, après simple dilution, procurera un revêtement à la fois en relief et coloré.

A cette fin, l'invention a pour objet une composition sèche du type comprenant au moins deux constituants secs et destinée à être diluée dans un liquide tel que de l'eau en vue de son application sur un support afin d'en modifier la surface, caractérisée en ce que le premier constituant sec a une couleur uniforme avantageusement blanche et le second également sec est formé de fibres indépendantes de couleur différente de celle du premier constituant et de dimensions nettement inférieures à celles dudit premier constituant afin de pouvoir constituer un liant dans lequel se fond le premier constituant pour créer ensemble une combinaison sèche d'aspect granuleux et de couleur sensiblement uniforme résultant de l'intime association à sec des couleurs des deux constituants.

De préférence, le second constituant est formé de fibres d'environ un millimètre de longueur, du type utilisé couramment pour le flocage d'articles.

L'invention a également pour objet un dispositif pour obtenir la composition sèche ci-dessus, caractérisé en ce qu'il comprend d'une part un mélangeur composé d'un châssis fixe et d'un réservoir substantiellement sphérique, muni d'une porte d'accès et monté rotatif autour d'un axe transversal et, d'autre part, d'un ensemble doseur-ensacheur comprenant un réceptable dont l'embouchure est adaptée à recevoir une embase associée à un tuyau flexible d'aspirateur près de son extrémité de refoulement tandis que l'extrémité d'aspiration peut être introduite dans le réservoir arrêté, par la porte ouverte.

Selon d'autres caractéristiques de ce dispositif :
- le réceptacle de l'ensemble doseur-ensacheur comprend un fond coulissant à la manière d'un piston et est monté pivotant selon un axe horizontal, l'embouchure dudit réceptacle étant adaptée à recevoir un manchon rigide dans lequel a dû être placé un sac souple dont les bords libres ont dû être rabattus sur l'embouchure du manchon afin de faire communiquer l'intérieur du réceptacle et l'intérieur du sac souple;

- le fond coulissant présente une convexité, de préférence conique;

- le manchon rigide présente un fond opposé à une extrémité libre par laquelle le sac souple soit être introduit et est muni d'une pédale fixée obliquement près du fond, afin qu'en maintenant celle-ci sur un sol horizontal, l'axe commun au manchon, au sac souple et au réceptacle soit oblique;

- le châssis comprend un anneau rigide qui entoure le réservoir et auquel on peut accrocher de manière amovible un support pour l'embase associée au tuyau flexible d'aspirateur, cet anneau recevant un pivot d'axe horizontal pour un support du réceptacle;

- le support de réceptacle est formé par une bague solidaire d'un pivot radial, le réceptacle recevant une poignée extérieure longitudinale fixée audit réceptacle de part et d'autre de la bague afin que le réceptacle puisse coulisser par rapport à la bague mais ne puisse pas en être séparé;

- l'aspirateur comprend d'une part un support contenant un ensemble moto-aspirateur et présentant une ouverture sur laquelle doit reposer le réceptacle, lequel a un fond perméable à l'air mais non aux constituants devant être aspirés hors de réservoir arrêté;

- la porte du réservoir est convexe sur celle de ses faces qui est intérieure au réservoir quand la porte est fermée.

L'invention sera bien comprise par la description détaillée ci-après faite en référence au dessin annexé. Bien entendu, la description dt le dessin ne sont donnés qu'à titre d'exemple indicatif et non limitatif.

Les figures 1 et 2 sont des vues schématiques vou lant illustrer l'aspect d'une composition de type connu.

Les figures 3 et 4 sont des vues schématiques voulant illustrer l'aspect d'une composition conforme à l'invention.

La figure 5 est une vue schématique d'ensemble, en perspective d'un dispositif conforme à l'invention dans la situation qui correspond à la rotation du réservoir dans lequel s'opère le mélange des constituants.

La figure 6 est une vue schematique montrant un dispositif conforme à l'invention vu de dessus dans la situation qui correspond à l'aspiration de la composition hors du réservoir arrêté.

La figure 7 est une vue schématique en coupe d'un support destiné à recevoir une embase solidaire de l'extrémité aval d'un tuyau flexible d'aspirateur destiné à vider le réservoir de mélange.

La figure 8 est une vie schématique montrant en coupe un réceptacle devant recevoir la composition issue du réservoir de mélange.

La figure 9 est une vue schématique en coupe d'un manchon rigide dans lequel est placé un sac souple devant contenir la composition.

La figure 10 est une vue schématique montrant l'association du réceptacle de la figure 8 et du manchon de la figure 9 muni de son sac.

La figure 11 est une vue schématique montrant le transfert de la composition depuis le réceptacle de la figure 8 jusque dans le sac de la figure 9.

La figure 12 illustre schématiquement le sac de la figure 9 plein de composition et fermé.

La figure 13 est une vue schématique partielle en coupe du réservoir rotatif montrant la convexité de la face interne de la porte.

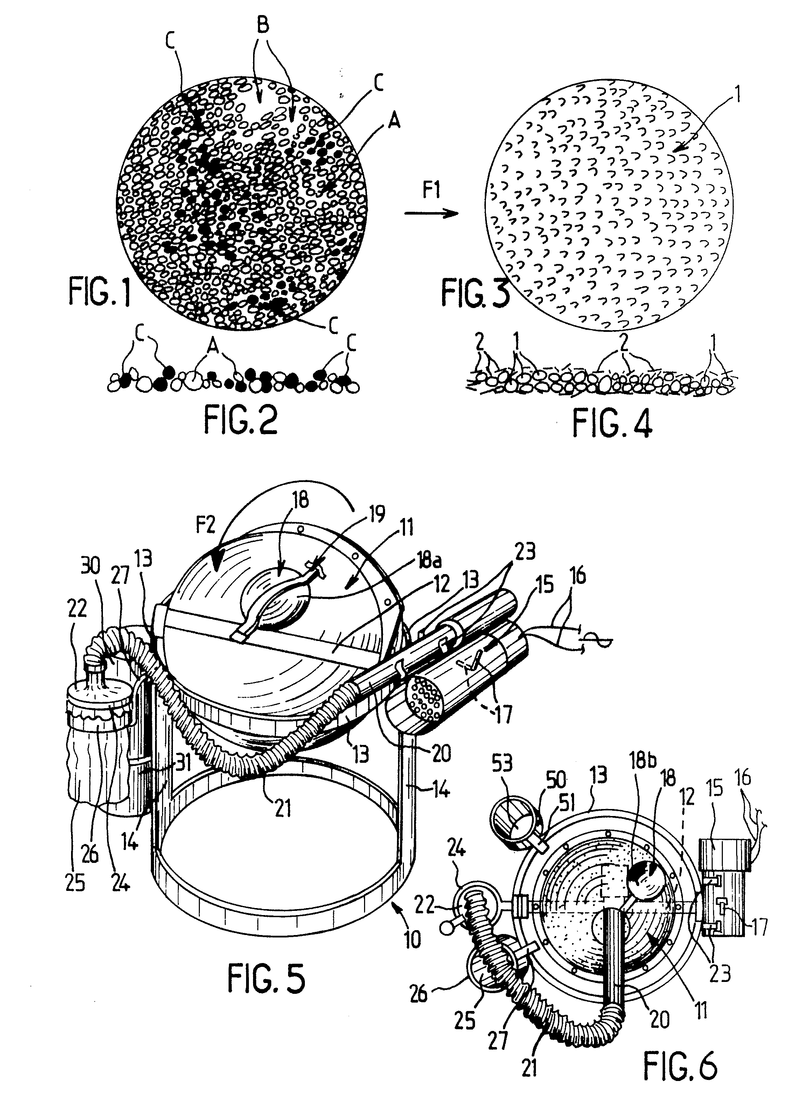

En se reportant aux figures 1 et 2, on voit qu'en observant une composition conforme à l'état de la technique, celle-ci est formée par la juxtaposition d'une part de grains A, et/ou de flocons B, par exemple de couleur blanche et d'autre part de grains ou particules C d'aspect différent, par exemple des fragments de pierre de couleur noire.

Ces constituants différents sont justaposés et se distinguent, de loin, plus ou moins nettement selon que leurs couleurs sont plus contrastées ou que leurs nombres respectifs sont plus ou moins dissemblables. La composition de la figure 1 observée à au moins un mètre paraîtrait de couleur dominante blanche et mélangée de traces noires plus ou moins étendues. Si le constituant dit "de base" blanc et le second constituant foncé, par exemple vert, étaient mélangés à parts égales, l'observateur aurait une impression d'un matériau formé de points alternativement blancs et verts donnant un aspect d'ensemble vert clair.

Ces particules étrangères les une aux autres ne sont maintenues que par un liant adhésif que l'on incorpore parfois au mélange sec sous forme de grains de colle. Lors de la dilution de la composition dans un liquide tel que de l'eau, les grains de colle sont dissous et se répandent dans les intervalles avec l'eau puis l'eau s'évaporant, la colle durcit et cimente toutes les particules entre elles et les fixent à la surface du support sur laquelle on a appliqué la solution.

Ici, on n'a représenté que trois sortes d'éléments mais en pratique on trouve des compositions qui en coportent plus, notamment des paillettes métalliques ou cellulosiques brillantes etc.

Sur les figures 3 et 4, on a tenté de représenter l'aspect très différent d'une composition conforme à l'invention. Sur la figure 3, on voit une composition appliquée sur la surface d'un support et sensée être éclairée par une lumière dirigée selon la flèche F1, de sorte que l'on n'a dessiné que les ombres des constituants granuleux. Ici les constituants ont tous la même granulométrie pour simplifier le dessin mais dans la pratique un composition selon l'in vention peut, bien entendu, comporter des constituants de différentes grosseurs. En revanche, une composition conforme à l'invention a une coloration uniforme à de rares exceptions près car elle comprend d'une part un ou plusieurs constitu'nts 1 destinés uniquement à donner des reliefs et, d'autre part, des fibres innombrables 2 d'une ou plusieurs couleurs destinées à enrober, envelopper, le ou les constituants 1, à garnir les intervalles et, ainsi, à donner une coloration unique.

Cette coloration résulte de la combinaison des constituants car la couleur du ou des constituants 1 intervient mais d'une manière insensible à l'oeil d'un observateur situé à au moins un mètre. En effet, supposons d'abord qu'il n'y a qu'un seul composant 1 et qu'il soit de couleur blanche. On mélange à cette "base" des fibres 2 de couleur vert émeraude. La quantité de fibres 2 est telle qu'elles recouvrent beaucoup de la surface observable du constituant 1 mais pas en totalité, de sorte que la couleur blanche apparaît entre des fibres 2, lesquelles ayant à peu près un millimètre de long et quelques microns de diamétre sont si minces que l'oeil ne les distingue plus.

On peut dire que les fibres 2 effectuent une coloration "dans la masse" puisqu'elles garnissent même les intervalles invisibles. On réalise ainsi une sorte de teinture à sec et non chimique qui est d'autant plus intéressante et nouvelle qu'elle permet d'effectuer des dosages à la demande, en magasin ou dans de petits ateliers, avec un matériel de mise en oeuvre incomparablement plus simple que celui qui est nécessaire actuellement pour constituants hétérogènes.

Il est alors possible aux professionnels de stocker séparément les bases blanohes et des fibres colorées, puis de préparer à la demande de chaque client, dans la quantité exactement voulue par lui, même petite, des sacs de composition permettant de réaliser, après dilution dans de l'eau et introduction d'un adhésif en poudre, des revêtements conformes à des échantillons présentés audit client. On peut même accepter de foncer ou d'éclaircir les échantillons standard en jouant sur les quantités mélangées au dernier moment.

Bien entendu, la loi des grands nombres peut jouer et l'on peut trouver des particules du constituant 1 qui ne seraient recouvertes que par très peu de fibres, voire pas du tout mais il s'agirait d'exceptions influant peu sur l'aspect d'ensemble qui est, après application, une surface à reliefs plus ou moins prononcés et plus ou moins variés et à coloration uniforme. En raison de ces exceptions, on qualifiera cette coloration de "sensiblement uniforme", notamment dans la revendication 1, mais il faut encore rappeler qu'une surface enduite avec une composition conforme à l'invention est destinée à être observée de loin et non de prés puisque les applications essentielles de cette composition se trouvent dans le bâtiment et la décoration : murs et parois, panneaux décoratifs etc. C'est donc son aspect observé à distance qu'il importe de considérer.

Comme on y a déjà fait allusion plus haut, une composition conforme à l'invention se prépare à sec, en petites quantités, voire au fur et à mesure des commandes. Il faut pour cela un matériel simple, fiable et performant.

En se reportant maintenant aux figures 5 à 13, on voit un dispositif conforme à l'invention et destiné à la préparation d'une composition conforme à l'invention.

Sur la figure 5, on voit l'ensemble du dispositif qui comprend un châssis 10 et un réservoir sphérique 11 monté sur un arbre rotatif 12 qui le traverse par son centre, qui tourillonne dans des paliers (non représentés) assujettis à un anndau 13 qui fait partie du châssis 10 et qui est fixé à des montants 14. L'arbre 12 est entraîné par un moteur électrique 15 alimenté par des fils 16 et équipé d'un interrupteur 17.

Le réservoir 11 est muni d'une porte 18 articulée et associée à un mécanisme de verrouillage 19.

Pour obtenir une composition, on introduit dans le réservoir 11, par la porte 18 ouverte, un premier constituant, par exemple un mélange de base composé de fibres grossièrement broyées, de différentes grosseurs de flocons. Puis, on déverse dans le réservoir 11 une ou plusieurs doses de fibres du genre de celles connues pour effectuer un flocage, les quantrités relatives étant bien entendu calculées en fonction de la teinte finale désirée.

Quand tous les constituants ont été versés dans le réservoir 11, on ferme la porte 18, on la verrouille au moyen du mécanisme 19 qui est de tnut type connu et on manoeuvre l'interrupteur 17 qui se trouve dans la position de la figure 1. Le réservoir est alors entraîné en rotation autour de l'axe 12, selon la flèche F2 et le mélange se produit par retournements répétés, lesquels sont facilités par l'axe 12 qui s'étend en travers du réservoir 11, de sorte que la masse de produits à mélanger, d'abord entraînée vers le haut par frottement, s'écroule lorsqu'elle parvient dans la région supérieure et tombe sur l'axe 12 qui provoque sa fragmentation par des projections latérales aléatoires.

Lorsque le mélange est correct, ce que l'on apprécie expérimentalement, notamment en observant la couleur de l'ensemble en mouvement quand le réservoir 11 est transparent, ce qui est le cas ici, on actionne l'interrupteur 17 qui passe à la position de la figure 2 pour arrêter le moteur 15.

Le réservoir 11 doit être vidé au moyen d'un aspirateur qui comprend un embout rigide 20 placé à l'extrémité amont ou "d'aspiration", d'un tuyau flexible 21 dont l'extrémité aval ou "de refoulement" est assujettie à une embase 22.

Lorsque le réservoir 11 est en rotation (ou, bien entendu quand le dispositif est inutilisé), l'aspirateur est en position de repos : l'embout est placé sur le moteur 15 et y est retenu par des pinces élastiques 23 de type connu. L'embase 22 est circulaire et porte un joint périphérique élastique 24 afin de constituer un couvercle sensiblement étanche pour un récipient d'ouverture adaptée. Comme cela est représenté sur la figure 1, l'embase 22 est posée sur l'embouchure d'un sac souple 25 maintenu ouvert par un cercle rigide 26 sur le bord supérieur duquel le sac est rabattu. Ainsi, les fragments de mélange restés dans le tuyau 21 lors de l'arrêt précédent sont récupérés dans le sac 25. Le cercle 26 porte un crochet 27 par lequel on le suspend à l'anneau 13.

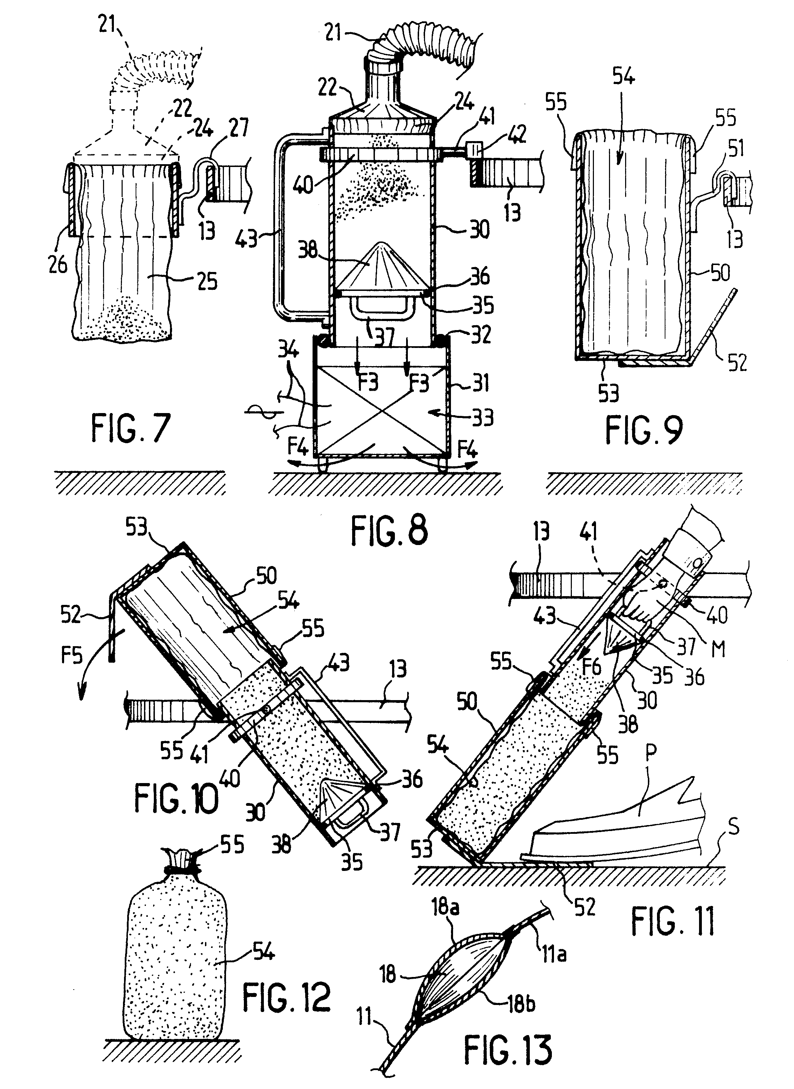

Pour vider le réservoir 11, après arrêt du moteur 15, on retire l'embout 20 de ses pinces de maintien 23 et l'on retire l'embase 22 de sa position d'attente pour la poser et l'assujettir énergiquement sur l'embouchure d'un réceptacle 30 (figures 6 et 8) posé de manière amovible sur un support 31 qui est posé sur le sol, qui possède un joint d'étanchéité 32 devant enserrer la base du réceptacle 30 quand on met celui-ci en place et qui contient un ensemble moto-aspirateur 33 alimenté par des fils 34. Lorsqu'il est mis en marche au moyen d'un interrupteur (non représenté), l'ensemble 33 aspire selon les flèches F3 dans le réceptacle 30, dans le tuyau flexible 21, dans l'embout rigide 20 et ainsi provoque l'arrivée des produits mélangés dans le réceptacle 30.

Celui-ci est équipé d'un fond coulissant 35 portant un joint d'étanchéité périphérique 36, une poignée de manoeuvre 37 et un tamis 38 maintenu en forme de cône par exemple au moyen d'une armature non visible sur le dessin. Grâce au tamis 38, l'air aspiré parvient à l'ensemble motoaspirateur 33 et s'échappe selon les flèches F4 tandis que les particules de la composition aspirée sont retenues dans le réceptacle 30.

Le réceptacle 30 est engagé dans une bague de maintien 40 solidaire d'un pivot radial 41 monté pivotant dans un support 42 fixé à l'anneau 13. En outre, il est muni d'une poignée extérieure 43 fixée près de ses extrémités, de part et d'autre de la bague 40. De la sorte, le réceptacle 30 peut coulisser dans la bague 40 mais ne peut pas en être séparé. La bague 40, quant à elle, peut pivoter selon l'axe du pivot 41.

Lorsque le réceptacle 30 est plein, ce que l'on constate facilement quand il est transparent, ce qui est le cas ici, on arrête l'ensemble moto-aspirateur 33, on retire l'embase 22 du réceptacle 30 on la pose sur le cercle 26, audessus du sac 25, puis on replace l'embout rigide 20 sur le moteur 15 en l'engageant dans les pinces de maintien 23 (figure 1).

A côté de l'ensemble aspirateur 21-22-30-31, se trouve un manchon rigide 50 muni d'un crochet 51 par lequel il est suspendu à l'anneau 13 et d'une pédale 52 fixée à son fond 53 et s'étendant obliquement. Dans le manchon rigide 50, on place un sac souple 54 dont on retourne le bord 55 sur celui du manchon (figure 9)

Pour vider le réceptacle 30, on coiffe son embouchure avec le manchon 50 et le sac 54, après l'avoir décroché de l'anneau 13. On soulève à la fois le réceptacle 30 plein et le manchon 50 pour dégager le réceptacle 30 hors du support 31 et on les fait pivoter, selon la flèche F5, sans peine ni aléa grâce au pivot 41 de la bague 40 (figure 10), jusqu'à ce que le fond 35 soit proche de la verticale. On fait glisser le réceptacle 30 et le manchon 50 jusqu'à ce que la pédale 52 ait atteint le sol (figure 11).

Il faut remarquer combien ces éléments apparemment disparates sont stables grâce à la bague de maintien 40 et à la pàdale 52 que l'usager maintient avec son pied P contre le sol S.

Avec sa main M, l'usager saisit le poignée 37 et fait coulisser le fond 35 en l'enfonçant dans le réceptacle 30 selon la flèche F6 afin de pousser la composition directement dans le sac 54. La forme convexe du tamis 38 favorise la compression de la matière poussée. Cette opération facile et rapide évite les fuites de produit, assure le transfert er permet le tassement de la composition malgré son caractère volatil, presqu'impondérable, et très sensible aux mouvements d'air.

Lorsque la composition a été forcée dans le sac 54 et que l'air s'est échappé à travers le ramis 38, l'usager remet le fond 35 à sa position d'origine en tirant sur la poignée 37, puis retird le réceptacle 30 tout en maintenant le manchon 50 par sa pédale 52, puis ramène ce réceptacle 30 au-dessus du support 31 en faisant pivoter la bague 40 et en faisant coulisser le réceptacle 30 par rapport à ladite bague 40. Ensuite, il dégage le bord 55 et extrait le sac 54 hors du manchon 50. Le sac 54 rempli peut être fermé par un lien de tout type connu 56 et contient une composition dosée prête à être diluée pour application (figure 12).

Après retrait du réceptacle 30 et avant fermeture du sac 54, on peut placer un objet dans celui-ci, par exemple un sachet contenant une dose de granulés d'adhésif que l'on doit verser dans un récipient au moment de diluer la composition avec de l'eau.

Le dispositif est prêt pour un nouveau cycle.

Sur la figure 13, on voit un détail montrant que la porte 18 peut être convexe sur sa face extérieure 18a ou bien avoir le même rayon de courbure que le réservoir sphérique 11 et que sa face interne 18b peut aussi être convexe afin de constituer un obstacle par rapport à la surface interne lisse 11a du réservoir, grâce à quoi cette bosse 18b favorise l'entraînement des constituants lors de la rotation du réservoir 11 et contribue à la rapidité et à la qualité du mélange.

**Revendications**

1- Composition sèche du type comprenant au moins deux constituants secs et destinée à être diluée dans un liquide tel que de l'eau en vue de son application sur un support afin d'en modifier la surface, caractérisée en ce que le premier constituant sec (1) a une couleur uniforme avantageusement blanche et le second également sec (2) est formé de fibres indépendantes de couleur différente de celle du premier constituant et de dimensions nettement inférieures à celles dudit premier constituant afin de pouvoir constituer un liant dans lequel se fond le premier constituant (1) pour créer ensemble une combinaison sèche d'aspect granuleux et de couleur sensiblement uniforme résultant de l'intime association à sec des couleurs des deux constituants (1) et (2).

2- Composition selon la revendication 1, caractérisé en ce que le second constituant est formé de fibres (2) d'environ un millimètre de longueur, du type utilisé couramment pour le flocage d'articles.

3- Dispositif pour obtenir une composition sèche selon la revendication 1, caractérisé en ce qu'il comprend d'une part un mélangeur composé d'un châssis fixe (10) et d'un réservoir (11) substantiellement sphérique, muni d'une porte d'accès (18) et monté rotatif autour d'un axe transversal (12) et, d'autre part, d'un ensemble doseur- ensacheur comprenant un réceptacle (30) dont l'embouchure est adaptée à recevoir une embase (22) associée à un tuyau flexible (21) d'aspirateur près de son extrémité de refoulement tandis que l'extrémité d'aspiration peut être introduite dans le réservoir arrêté, par la porte (18) ouverte.

4- Dispositif selon la revendication 3, caractérisé en ce que le réceptacle (30) de l'ensemble doseur- ensacheur comprend un fond (35) coulissant à la manière d'un piston et est monté pivotant selon un axe horizontal (41), l'embouchure dudit réceptacle (30) étant adaptée à recevoir un manchon rigide (50) dans lequel a dû être placé un sac souple (54) dont les bords libres (55) ont dû être rabattus sur l'embouchure du manchon (50) afin de faire communiquer l'intérieur du réceptacle (30) et l'intérieur du sac souple (54).

5- Dispositif selon la revendication 4, caractérisé en ce que le fond coulissant (35) présente une convexité (38), de préférence conique.

6- Dispositif selon la revendication 4, caractérisé en ce que le manchon rigide (50) présente un fond (53) opposé à une extrémité libre par laquelle le sac souple (54) doit être introduit et est muni d'une pédale (52) fixée obliquement près du fond (53), afin qu'en maintenant celle-ci sur un sol horizontal (S), l'axe commun au manchon (50), au sac souple (54) et au réceptacle (30) soit oblique.

7- Dispositif selon la revendication 4, caractérisé en ce que le châssis (10) comprend un anneau rigide (13) qui entoure le réservoir (11) et auquel on peut accrocher de manière amovible un support (26) pour l'embase (22) associée au tuyau flexible (21) d'aspirateur, cet anneau (13) recevant un pivot (41) d'axe horizontal pour un support (40) du réceptacle (30).

8- Dispositif selon la revendication 7, caractérisé en ce que le support du réceptacle (30) est formé par une bague (40) solidaire d'un pivot radial (41), le réceptacle (30), recevant une poignée extérieure longitudinale (43) fixée audit réceptacle (30) de part et d'autre de la bague (40) afin que le réceptacle (30) puisse coulisser par rapport à la bague (40) mais ne puisse pas en être séparé.

9- Dispositif selon la revendication 3, caractérisé en ce que l'aspirateur comprend d'une part un support (31) contenant un ensemble moto-aspirateur (33) et présen tant une ouverture sur laquelle doit reposer le réceptacle (30), lequel a un fond (35-38) perméable à l'air mais non aux constituants devant être aspirés hors du réservoir (11) arrêté.

10- Dispositif selon la revendication 3, caractérisé en ce que la porte (18) du réservoir (11) est convexe sur celle de ses faces (18b) qui est intérieure au réservoir (11) quand la porte (18) est fermée.

FIG.1

FIG.2

F1

FIG.3

FIG.4

FIG.5

FIG.6

0269519

FIG. 7

FIG. 8

FIG. 9

FIG.10

FIG. 11

FIG.12

FIG.13